# EUROPEAN PATENT SPECIFICATION

(11) **EP 2 399 786 B1**
(45) Date of publication and mention of the grant of the patent: **23.01.2013**
(21) Application number: 10006456.7
(22) Date of filing: 22.06.2010
(51) Int. Cl.: B60R 22/46

(54) **Cooled control unit of a motorized belt retractor**
Gekühlte Steuerungseinheit eines motorisierten Gurtstraffers
Unité de contrôle refroidi d'un retracteur de ceinture motorisée

(43) Date of publication of application: 28.12.2011
(73) Proprietor: Autoliv Development AB, 447 83 Vårgårda (SE)
(72) Inventor: Judet, Bernard, 95520 Osny (FR)
(74) Representative: Müller Verweyen

(56) References cited:
- EP-A1- 1 666 318
- DE-A1-102007 017 375
- JP-A- 2005 297 781
- US-A1- 2007 284 174
- US-B1- 6 476 535

## Description

The present invention relates to a cooled control unit of a motorized belt retractor.

Motorized belt retractors are typically used in vehicles with seats having a motorized safety belt mechanism connected to a central electronic control unit (ECU) via a vehicle network such as a controller area network (CAN) or a local interconnect network (LIN). Such known systems may detect a pre-impact situation before an accident occurs by receiving a signal from an accelerometer which quickly detects a strong negative celeration of vehicle that may be caused by a slam on the brakes or a collision, for example. Upon a signal from the ECU, the motorized belt retractors, which are usually mounted at each vehicle seat, quickly retract the associated safety belts such that a tight contact between the belt and a passenger's body is provided before the inertia of the passenger's body causes a forward pressure against the safety belt. Thereby, the acceleration of a passenger's body relative to the seat and safety belt is minimized and the risk of body harm due to the impact of the belt on the body during an accident is reduced.

Such a system is for instance known from EP 1 705 081 B1 which is directed to a seat belt retractor having an energy absorbing mechanism which absorbs impact energy applied to an occupant so as to limit load on the seat belt in the event of an emergency such as a collision.

Another example of such a known system is described in US 2007/0284174 A1, which relates to a vehicle belt apparatus including an electric-type pretensioner that includes a motor for rotationally driving a belt reel to take up a belt.

It is a problem of the known systems that electronic components of the control unit may become hot when the motorized belt retractor is activated. In order to prevent a blow of transistors or other electronic components of the control unit, a cooling should be provided.

As described in US 2006/0232931 A1, a fan for air cooling may be arranged at a printed circuit board (PCB) equipped with the electronic components. However, such an additional fan is space-consuming, needs an additional power supply and introduces additional production costs.

It is therefore the object of the present invention to provide a cooled control unit of a motorized belt retractor without the need of an additional fan for cooling the electronic components of the control unit.

This problem is solved by a control unit according to the subject-matter of claim 1. Advantageous embodiments of the invention are subject of the dependent claims.

According to the present invention, a control unit of a motorized belt retractor is provided, wherein the control unit comprises a magnetic wheel, which is arranged and adapted to be driven by the motor of the belt retractor, and a Hall sensor arranged and configured to detect the rotational speed of the magnetic wheel, wherein the magnetic wheel is a fan providing an air flow for cooling electronic components of the control unit.

The term "fan" is used herein to denote any device with at least one rotatable surface that is arranged and configured to produce an intended air flow upon rotation.

The present invention saves an additional space-consuming fan, which needs an additional power supply and introduces additional production costs. Instead, a fan functionality is implemented into the magnetic wheel that is used for detecting the rotational speed of the motor of the belt retractor.

Preferably, the magnetic wheel comprises magnetic sections arranged circumferentially such that a magnetic field alternates along a circumferential path around the magnetic wheel. Thereby, the Hall sensor arranged within the magnetic field may detect the rotational speed of the motor of the belt retractor by detecting the frequency of alterations of the magnetic field when the magnetic wheel is rotating.

In a first preferred embodiment of the inventive control unit, the magnetic wheel comprises a wheel rim and spokes, wherein the wheel rim comprises magnetic sections arranged circumferentially such that a magnetic field alternates along a circumferential path along the wheel rim, and wherein at least one of the spokes is formed as a propeller blade.

In an alternative second preferred embodiment of the inventive control unit, the magnetic wheel comprises radially extending propeller blades, wherein at least one of the propeller blades comprises a magnetic section. A wheel rim is not needed in this embodiment.

It is advantageous if the control unit comprises a housing and a printed circuit board (PCB) arranged within the housing. In such an embodiment, the Hall sensor and the electronic components of the control unit may be arranged on the PCB and the magnetic wheel is arranged to rotate around an axis perpendicular to the PCB. Furthermore, the housing and the PCB may comprise venting holes through which air can flow along the rotational axis of the magnetic wheel. Such a design is very compact and provides a good cooling effect.

In the following, the present invention is described in further detail with reference to the accompanying figures.

Fig. 1 shows a cross-sectional side view of a preferred embodiment of the inventive control unit connected to a motor of a belt retractor.

Fig. 2 shows a simplified detailed front view of the magnetic wheel of a preferred embodiment of the inventive control unit.

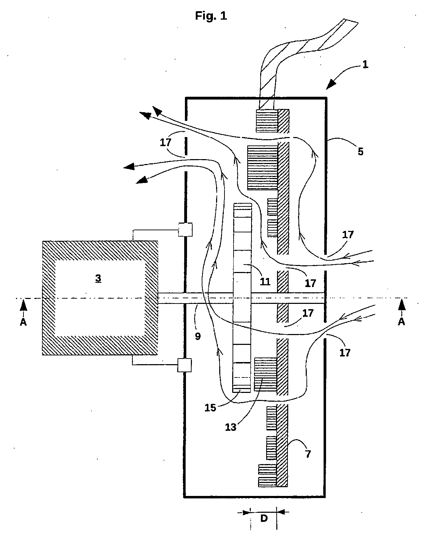

Fig. 1 shows a control unit 1 of a motorized belt retractor (not shown), wherein the control unit 1 is connected to the motor 3 of the belt retractor. The control unit 1 comprises a housing 5 and a printed circuit board (PCB) 7 arranged within the housing 5. An axle 9 extends from the motor 3 into the housing 5 along an axis A perpendicular to the PCB 7. A magnetic wheel 11 is mounted on the axle 9 such that it is able to rotate around the axis A at a distance D to the PCB 7. Those electronic components which may become hot when the motor is activated may be arranged on the PCB 7 in the gap between the magnetic wheel 11 and the PCB 7. Larger electronic components that may become hot and do not fit into the gap between the magnetic wheel 11 and the PCB 7 may be arranged at a radial distance from the axis A exceeding the radius of the magnetic wheel 11. In order to achieve the best cooling effect, the distance of the heat-sensitive electronic components to the magnetic wheel 11 should be as small as possible.

One of the electronic components of the control unit 1 is a Hall sensor 13 which is arranged within the magnetic field of the magnetic wheel 11 and configured to detect the rotational speed of the magnetic wheel 11. In the shown embodiment, the magnetic wheel 11 comprises a wheel rim 15, wherein magnetic sections are arranged circumferentially at the wheel rim 15 such that a magnetic field alternates along a circumferential path along the wheel rim 15.

In order to allow an air flow through the housing 5 for cooling the electronic components on the PCB 7, the housing 5 and the PCB 7 comprise venting holes 17 through which air can flow along the rotational axis A of the magnetic wheel 11. In Fig. 1, the air flow is schematically shown by arrows. The air flow passing along heat-sensitive components on the PCB 7 takes up heat and transports the heat to the outside of the housing 5.

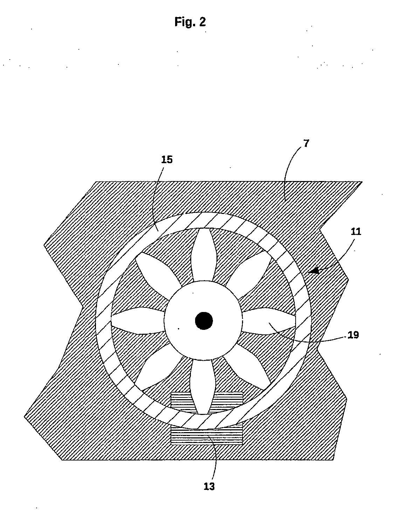

The wheel rim 15 is better visible in the front view of Fig. 2. The wheel rim 15, which is connected to the axle 9 by spokes in form of propeller blades 19, rotates in close vicinity to the Hall sensor 13 on the PCB 7. The fan functionality of the magnetic wheel 11 is implemented by the propeller blades 19 which have an inclined surface for producing an axial air flow when the magnetic wheel 11 rotates.

In another preferred embodiment that is not shown, a wheel rim 15 is not necessary as the magnetic sections of the magnetic wheel 11 may also be comprised in one or more of the radially extending propeller blades 19, preferably at their tip.

Although the accompanying figures only show a fan functionality of the magnetic wheel producing an axial air flow, it should be understood that the magnetic wheel may also be a radial fan. Such a radial fan may comprise radially extending air paddles for producing a radially outward air flow. In this case, the magnetic sections of the magnetic wheel may be comprised in the air paddles.

## Claims

1. A control unit (1) of a motorized belt retractor comprising a magnetic wheel (11), which is arranged and adapted to be driven by the motor (3) of the belt retractor, and a Hall sensor (13) arranged and configured to detect the rotational speed of the magnetic wheel (11), wherein the magnetic wheel (11) is a fan providing an air flow for cooling electronic components of the control unit (1).

2. The control unit (1) according to claim 1, wherein the magnetic wheel (11) comprises magnetic sections arranged circumferentially such that a magnetic field alternates along a circumferential path around the magnetic wheel (11).

3. The control unit according to claim 1 or 2, wherein the magnetic wheel (11) comprises a wheel rim (15) and spokes, wherein the wheel rim (15) comprises magnetic sections arranged circumferentially such that a magnetic field alternates along a circumferential path along the wheel rim (15), and wherein at least one of the spokes is formed as a propeller blade (19).

4. The control unit according claim 1 or 2, wherein the magnetic wheel (11) comprises radially extending propeller blades (19), wherein at least one of the propeller blades (19) comprises a magnetic section.

5. The control unit according to any of the preceding claims, wherein the control unit (1) comprises a housing (5) and a printed circuit board (7) arranged within the housing (5), wherein the Hall sensor (13) and the electronic components of the control unit (1) are arranged on the printed circuit board (7) and the magnetic wheel (11) is arranged to rotate around an axis (A) perpendicular to the printed circuit board (7), and wherein the housing (5) and the printed circuit board (7) comprise venting holes (17) through which air can flow along the rotational axis of the magnetic wheel (11).

## Patentansprüche

1. Eine Steuereinheit (1) eines motorbetriebenen Gurtaufrollers umfassend ein magnetisches Rad (11), welches angeordnet und eingerichtet ist, um von dem Motor (3) des Gurtaufrollers angetrieben zu werden, und einen Hallsensor (13), welcher angeordnet und ausgelegt ist, um die Rotationsgeschwindigkeit des magnetischen Rades (11) zu erfassen, wobei es sich bei dem magnetischen Rad (11) um einen Lüfter handelt, welcher einen Luftstrom zur Kühlung elektronischer Bauteile der Steuereinheit (1) bereitstellt.

2. Die Steuereinheit (1) nach Anspruch 1, wobei das magnetische Rad (11) so über den Umfang angeordnete magnetische Abschnitte aufweist, dass ein Magnetfeld entlang einer Umfangsbahn um das magnetische Rad (11) herum alterniert.

3. Die Steuereinheit nach Anspruch 1 oder 2, wobei das magnetische Rad (11) einen Radkranz (15) und Speichen umfasst, wobei der Radkranz (15) so über den Umfang angeordnete magnetische Abschnitte aufweist, dass ein Magnetfeld entlang einer Umfangsbahn entlang des Radkranzes (15) alterniert, und wobei mindestens eine der Speichen als ein Propellerblatt (19) ausgebildet ist.

4. Die Steuereinheit nach Anspruch 1 oder 2, wobei das magnetische Rad (11) sich radial erstreckende Propellerblätter (19) aufweist, wobei mindestens eines der Propellerblätter (19) einen magnetischen Abschnitt aufweist.

5. Die Steuereinheit nach einem der vorangegangenen Ansprüche, wobei die Steuereinheit (1) ein Gehäuse (5) und eine innerhalb des Gehäuses (5) angeordnete Leiterplatte (7) umfasst, wobei der Hallsensor (13) und die elektronischen Bauteile der Steuereinheit (1) auf der Leiterplatte (7) angeordnet sind, und das magnetische Rad (11) so angeordnet ist, dass es um eine Achse (A) senkrecht zu der Leiterplatte (7) rotiert, und wobei das Gehäuse (5) und die Leiterplatte (7) Belüftungsöffnungen (17) aufweisen, durch welche Luft entlang der Rotationsachse des magnetischen Rades (11) strömen kann.

## Revendications

1. Une unité de commande (1) d'un enrouleur de ceinture motorisé comprenant une roue magnétique (11), qui est agencée et adaptée pour être entraînée par le moteur (3) de l'enrouleur de ceinture, et un capteur à effet Hall (13) agencé et configuré pour détecter la vitesse de rotation de la roue magnétique (11), dans laquelle la roue magnétique (11) est un ventilateur fournissant un débit d'air pour le refroidissement des composants électroniques de l'unité de commande (1).

2. L'unité de commande (1) selon la revendication 1, dans laquelle la roue magnétique (11) comprend des sections magnétiques agencées circonférentiellement de telle sorte qu'un champ magnétique alterne le long d'un chemin circonférentiel autour de la roue magnétique (11).

3. L'unité de commande selon la revendication 1 ou 2, dans laquelle la roue magnétique (11) comprend une jante de roue (15) et des rayons, dans laquelle la jante de roue (15) comprend des sections magnétiques agencées circonférentiellement de telle sorte qu'un champ magnétique alterne le long d'un chemin circonférentiel le long de la jante de roue (15), et dans laquelle au moins un des rayons est réalisé sous la forme d'une pale d'hélice (19).

4. L'unité de commande selon la revendication 1 ou 2, dans laquelle la roue magnétique (11) comprend des pales d'hélice (19) s'étendant radialement, dans laquelle au moins une des pales d'hélice (19) comprend une section magnétique.

5. L'unité de commande selon l'une quelconque des revendications précédentes, dans laquelle l'unité de commande (1) comprend un boîtier (5) et une carte de circuit imprimé (7) agencée dans le boîtier (5), dans laquelle le capteur à effet Hall (13) et les composants électroniques de l'unité de commande (1) sont agencés sur la carte de circuit imprimé (7) et la roue magnétique (11) est agencée pour tourner autour d'un axe (A) perpendiculaire à la carte de circuit imprimé (7), et dans laquelle le boîtier (5) et la carte de circuit imprimé (7) comprennent des trous de ventilation (17) à travers lesquels l'air peut circuler le long de l'axe de rotation de la roue magnétique (11).
